# EUROPÄISCHE PATENTSCHRIFT

(11) **EP 2 879 939 B1**
(45) Veröffentlichungstag und Bekanntmachung des Hinweises auf die Patenterteilung: **28.12.2016**
(21) Anmeldenummer: 13742192.1
(22) Anmeldetag: 22.07.2013
(51) Int. Cl.: B62D 15/02, B60Q 9/00

(54) **VERFAHREN ZUR UNTERSTÜTZUNG EINES FAHRERS EINES FAHRZEUGS**
VEHICLE DRIVER ASSISTANCE METHOD
PROCÉDÉ D'ASSISTANCE D'UN CONDUCTEUR DE VÉHICULE

(30) Priorität: 06.08.2012 DE 102012213899
(43) Veröffentlichungstag der Anmeldung: 10.06.2015
(73) Patentinhaber: Robert Bosch GmbH, 70442 Stuttgart (DE)
(72) Erfinder: HERDER, Bjoern, 70469 Stuttgart (DE)
(86) Internationale Anmeldenummer: PCT/EP2013/065391
(87) Internationale Veröffentlichungsnummer: WO 2014/023562

(56) Entgegenhaltungen:
- EP-A1- 2 581 272
- WO-A1-2011/155349
- DE-A1-102004 001 122
- DE-A1-102004 011 088
- DE-A1-102008 020 561
- DE-A1-102008 036 009

## Beschreibung

### Stand der Technik

Die Erfindung betrifft ein Verfahren zur Unterstützung eines Fahrers eines Fahrzeugs, wobei das Fahrzeug ein Abstandswarnsystem, welches dem Fahrer einen Abstand zu einem Hindernis in der Umgebung des Fahrzeugs signalisiert, und ein Fahrassistenzsystem, welches bei einem Fahrmanöver die Querführung steuert, umfasst sowie eine Vorrichtung zur Durchführung des Verfahrens.

Assistenzsysteme zur Unterstützung eines Fahrers eines Fahrzeugs bei einem Fahrmanöver werden immer häufiger in moderne Fahrzeuge eingebaut. Diese Fahrassistenzsysteme umfassen beispielsweise Abstandswarnsysteme, die Hindernisse in der Umgebung des Fahrzeugs ermitteln und den Fahrer bei Unterschreitung eines Mindestabstands warnen. Desweiteren werden diese Fahrassistenzsysteme auch zur Unterstützung des Fahrers beim Ein- und Ausparken eingesetzt. Je nach Ausführungsform des Assistenzsystems wird der Fahrer dabei nicht nur über Anweisungen, sondern auch durch Lenkeingriffe und/oder Bremseingriffe unterstützt, sodass sich die Tätigkeit des Fahrers nach Aktivierung des Assistenzsystems auf die Kontrolle des Fahrmanövers und auf das Beschleunigen und Bremsen beschränkt.

Aus DE 10 2004 011 088 A1 ist ein Verfahren zur Unterstützung eines Fahrers bei einem Einparkmanöver bekannt. Die Umgebung des Fahrzeugs wird mit Sensoren vermessen und bei Vorhandensein einer ausreichend großen Parklücke wird dem Fahrer ein unterstütztes Einparken angeboten. Das Assistenzsystem ermittelt die optimale Einparkstrategie und gibt über die optische Anzeigevorrichtung eines bereits im Fahrzeug vorhandenen Abstandswarnsystems Lenkanweisungen. Die optische Anzeige ist hier als Balkenanzeige ausgeführt, über die der Fahrer die Abweichung des Ist-Lenkwinkels vom angeforderten Soll-Lenkwinkel ablesen kann. Bei Bedarf kann auch eine akustische Ausgabe der Lenkanweisungen erfolgen.

DE 10 2008 020 561 A1 beschreibt ein Verfahren und eine Vorrichtung bei der dem Fahrer sowohl eine noch zu fahrende Strecke, als auch ein Abstand zu einem Hindernis signalisiert werden kann. Die Vorrichtung umfasst Mittel zur Messung des Abstands zwischen einem Fahrzeug und einem Punkt und eine optische Anzeige in Form eines Fortschrittsbalkens zur Darstellung dieses Abstands. Der Punkt, zu dem der Abstand ermittelt wird, kann dabei beispielsweise ein Hindernis, eine Begrenzung eines Parkplatzes oder eine Stelle sein, an der ein Fahrtrichtungswechsel zum optimalen Einparken erfolgen sollte. Eine akustische Signalisierung der Abstandsinformation wird nicht beschrieben.

Aus DE 10 2004 001 122 A1 ist ein Fahrassistenzsystem bekannt, welches einem Fahrer beim Einparken Anweisungen in Form von Tönen oder optischen Anzeigen signalisiert. Über verschiedene Tonsignale wird dem Fahrer der verbleibende Abstand zu einem Haltepunkt angezeigt. Ein besonderes Signal wird dem Fahrer, je nach seiner Reaktionsgeschwindigkeit, kurz vor Erreichen eines Stopppunktes gegeben, sodass das Fahrzeug am definierten Punkt zum Stillstand kommt. Auch die Soll-Lenkrichtung kann über akustische Signale angezeigt werden.

EP 2 581 272 A1 offenbart ein Verfahren zur Unterstützung eines Fahrers eines Fahrzeugs, wobei das Fahrzeug ein Abstandswarnsystem, welches dem Fahrer einen Abstand zu einem Hindernis in der Umgebung des Fahrzeugs signalisiert, und ein Fahrassistenzsystem, welches bei einem Fahrmanöver die Querführung steuert, umfasst, wobei dem Fahrer Längsführungshinweise des Fahrassistenzsystems über eine Signalisierungsvorrichtung des Abstandswarnsystems angezeigt werden.

Bei den aus dem Stand der Technik bekannten Fahrassistenzsystemen ergeben sich Nachteile bei Fahrzeugen, die sowohl mit einem Abstandswarnsystem als auch mit einem Fahrassistenzsystem, welches bei einem Fahrmanöver die Querführung steuert, ausgestattet sind. Werden beispielsweise sowohl durch das Abstandswarnsystem optische und/oder akustische Abstandswarnungen als auch von dem Fahrassistenzsystem optische und/oder akustische Fahrhinweise zu Fahrtrichtungswechseln gegeben, erhält der Fahrer sehr viele unterschiedliche optische und/oder akustische Hinweise. Hierdurch kann es leicht zu einer Überlastung des Fahrers in komplexen Fahrsituationen wie beispielsweise beim Einparken kommen. Dabei ist eine exakte und schnelle Reaktion des Fahrers erforderlich, da das Parkendergebnis erheblich vom genauen Erreichen der Fahrtrichtungswechselpunkte abhängt.

Werden nur durch das Abstandswarnsystem optische und/oder akustische Hinweise gegeben und angenommen, dass der Fahrer bei einem Einparkmanöver bei Annäherung an eine Parklückenbegrenzung durch die erfolgte Abstandswarnung zu einem Fahrtrichtungswechsel bzw. Gangwechsel animiert wird, wird zwar die Menge an Hinweisen reduziert, jedoch ergeben sich dabei weitere Nachteile. So erfolgt beispielsweise kein Hinweis auf einen Fahrtrichtungswechsel, wenn die Parklücke nur auf einer Seite begrenzt ist und das Fahrassistenzsystem kann keinen Hinweis geben, falls die optimale Zuglänge zum Erreichen einer guten Endparkposition bereits vor dem parklückenbegrenzenden Objekt endet.

### Offenbarung der Erfindung

Es wird ein Verfahren zur Unterstützung eines Fahrers eines Fahrzeugs vorgeschlagen, wobei das Fahrzeug ein Abstandswarnsystem, welches dem Fahrer einen Abstand zu einem Hindernis in der Umgebung des Fahrzeugs signalisiert, und ein Fahrassistenzsystem, welches bei einem Fahrmanöver die Querführung steuert, umfasst, wobei dem Fahrer Längsführungshinweise des Fahrassistenzsystems über eine Signalisierungsvorrichtung des Abstandswarnsystems angezeigt werden.

Das Abstandswarnsystem und das Fahrassistenzsystem können dabei in einem gemeinsamen System oder als eigenständige, aber miteinander verbundene, Systeme ausgeführt sein. Das gemeinsame System oder die beiden voneinander unabhängigen Systeme verfügen über Sensoren, mit denen Objekte in der Umgebung des Fahrzeugs erfasst werden und das Abstandswarnsystem umfasst eine Signalisierungsvorrichtung mit der ein Abstand zu einem Objekt in der Umgebung des Fahrzeugs angezeigt werden kann. Sind die beiden Systeme unabhängig voneinander ausgeführt, umfasst jedes System ein eigenes Steuergerät, wobei beide Steuergeräte mit der Signalisierungsvorrichtung des Abstandswarnsystems verbunden sind. Sind Abstandswarnsystem und Fahrassistenzsystem zusammen als gemeinsames System ausgeführt, umfasst das System ein einziges Steuergerät, welches beide Funktionalitäten implementiert. Das Fahrassistenzsystem ist eingerichtet, bei einem unterstützten Fahrmanöver die Querführung zu steuern, beispielsweise über eine Verbindung des Steuergeräts mit einer Servolenkung, das Beschleunigen und Bremsen des Fahrzeugs obliegt dem Fahrer des Fahrzeugs. Dazu gibt das Fahrassistenzsystem dem Fahrer Längsführungshinweise über die Signalisierungsvorrichtung des Abstandswarnsystems.

In einer Ausführungsform des Verfahrens kann durch das Fahrassistenzsystem bei Überschreitung einer vorgegebenen Höchstgeschwindigkeit und/oder bei Unterschreitung eines Mindestabstands zu einem Objekt in der Umgebung des Fahrzeugs ein Bremseingriff erfolgen.

In der Erfindung werden dem Fahrer die Längsführungshinweise in Form eines Abstands des Fahrzeugs zu einem Punkt, an dem ein Fahrrichtungswechsel erfolgen oder das Fahrzeug angehalten werden soll, angezeigt.

In der Erfindung erzeugt das Fahrassistenzsystem zur Anzeige des Abstands zu dem Punkt, an dem ein Fahrtrichtungswechsel erfolgen oder das Fahrzeug angehalten werden soll, ein virtuelles Hindernis, welches vom Abstandswarnsystem wie ein tatsächliches Hindernis signalisiert wird.

Dadurch wird erreicht, dass die zusätzliche Anzeige der Punkte, an dem ein Fahrtrichtungswechsel erfolgen oder das Fahrzeug angehalten werden soll, leicht in bestehende Abstandswarnsysteme integrierbar ist und die Signalisierung für den Fahrer auf gleiche Weise wie ein Abstand zu einem Hindernis erfolgt.

Bei der Erzeugung eines virtuellen Hindernisses kann die Reaktionsgeschwindigkeit und die Fahrzeuggeschwindigkeit berücksichtigt werden, und der Abstand des virtuellen Hindernisses zum Fahrzeug mit einem Offset oder Faktor belegt werden. Dadurch wird erreicht, dass die Längsführungshinweise des Fahrassistenzsystems rechtzeitig gegeben werden und das Fahrzeug auch bei hoher Geschwindigkeit oder langsamer Reaktion des Fahrers am geplanten Punkt angehalten wird. Dieser aus Fahrzeuggeschwindigkeit und Reaktionsgeschwindigkeit des Fahrers gebildete Offset kann zusätzlich über Filter oder eine Hysteresefunktion beruhigt werden, damit Geschwindigkeitswechsel nicht zu einer sprunghaften Änderung der Abstandsanzeige führen.

In einer weiteren Ausführungsform des Verfahrens wird zusätzlich die Richtung, in der ein Hindernis liegt, angezeigt. Dadurch ist es dem Fahrer beispielsweise beim Einparken möglich, abzuschätzen, ob der nächste Einparkzug in Vorwärts- oder Rückwärtsrichtung erfolgt.

In einer Ausführungsform des Verfahrens erfolgt das Anzeigen der Längsführungshinweise akustisch, wobei der Abstand zu einem Hindernis über verschiedene Töne und/oder Tonfolgen angezeigt wird. Dabei ist es denkbar, den Abstand beispielsweise über die Tonhöhe anzuzeigen, wobei beispielsweise tiefere Töne einen größeren Abstand als hohe Töne signalisieren, und/oder über eine Tonfolge, bei der kurze Abstände zwischen den Tönen einen kurzen Abstand und lange Abstände zwischen den Tönen einen längeren Abstand anzeigen.

In einer weiteren Ausführungsform des Verfahrens erfolgt das Anzeigen der Längsführungshinweise optisch, wobei der Abstand zu einem Hindernis über mehrere Leuchtanzeigen und/oder über eine Balkenanzeige dargestellt wird. Die Anzeige lässt sich beispielsweise über mehrere Leuchtdioden umsetzen, wobei der Abstand über die Anzahl und/oder die Farbe der angesteuerten Leuchtdioden angezeigt wird. Ist in dem Fahrzeug ein Bildschirm, beispielsweise für ein Navigationssystem, vorhanden, kann auch dieser genutzt werden um den Abstand über einen Fortschrittsbalken darzustellen.

Je nach Möglichkeiten der Signalisierungsvorrichtung wird über eine Minimumbildung der kürzeste Abstand zu einem Hindernis signalisiert. Desweiteren ist es möglich beispielsweise bei einer optischen Anzeige die Umgebung des Fahrzeugs mit allen Hindernissen darzustellen. Durch die Behandlung der Punkte, an denen ein Fahrtrichtungswechsel erfolgen oder das Fahrzeug angehalten werden soll, als virtuelles Hindernis wird ein intuitives Erfassen der Situation durch den Fahrer ermöglicht.

Ein weiterer Aspekt der Erfindung ist es eine Vorrichtung zur Unterstützung eines Fahrers eines Fahrzeugs bereitzustellen, wobei die Vorrichtung Sensoren zur Erfassung eines Abstands des Fahrzeugs zu einem Hindernis, eine Signalisierungsvorrichtung und mindestens ein Steuergerät umfasst, wobei entweder ein Steuergerät als Steuergerät für ein Abstandswarnsystem und ein Fahrassistenzsystem ausgeführt ist, oder jeweils ein Steuergerät als Steuergerät für ein Abstandswarnsystem und ein Steuergerät als Steuergerät für ein Fahrassistenzsystem ausgeführt ist und das mindestens eine Steuergerät zur Durchführung des erfindungsgemäßen Verfahrens eingerichtet ist.

Die Sensoren zur Erfassung eines Abstands können dabei beispielsweise als Ultraschallsensoren, Radarsensoren, Lidarsensoren oder als optische Kameras ausgeführt sein. Zur Steuerung der Querführung und gegebenenfalls zur Vornahme eines Bremseingriffs ist die Vorrichtung mit weiteren Steuergeräten im Fahrzeug wie beispielsweise der Servolenkung oder des Antiblockiersystems (ABS) verbunden.

In einer Ausführungsform der Vorrichtung umfasst die Signalisierungseinrichtung einen Lautsprecher, eine optische Abstandsanzeigeeinrichtung, einen grafischen Bildschirm oder eine Kombination mindestens zwei dieser Mittel.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrassistenzsystems oder eines Subsystems hiervon in einem Fahrzeug handeln oder um eine Applikation für Fahrassistenzfunktionen, welche auf einem Smartphone ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-Rom, DVD oder einem USB-Stick. Zusätzlich oder alternativ kann das Computerprogramm auf einer Computereinrichtung wie etwa auf einem Server zum Herunterladen bereitgestellt werden, zum Beispiel über ein Datennetzwerk wie das Internet oder eine Kommunikationsverbindung wie etwa eine Telefonleitung oder eine drahtlose Verbindung.

Des Weiteren betrifft die Erfindung ein Fahrzeug, welches mit der erfindungsgemäßen Vorrichtung zur Unterstützung eines Fahrers eines Fahrzeugs ausgerüstet ist.

### Vorteile der Erfindung

Durch das erfindungsgemäße Verfahren kann ein Fahrassistenzsystem, welches einen Fahrer bei einem Fahrmanöver unterstützt und die Querführung steuert, die gleiche Signalisierungsvorrichtung wie ein ebenfalls im Fahrzeug vorhandenes Abstandswarnsystem verwenden. Dadurch wird zum einen das Integrieren zusätzlicher Anzeigevorrichtungen überflüssig, wodurch die Integration des Fahrassistenzsystems in das Fahrzeug vereinfacht wird. Zum Anderen erhält der Fahrer sämtliche bei einem Einparkmanöver relevanten Informationen, nämlich den Abstand zu einem Hindernis und den Abstand zu einem Punkt an dem ein Fahrtrichtungswechsel erfolgen oder das Fahrzeug angehalten werden soll, über eine einzige Signalisierungsvorrichtung. Dabei kann der Fahrer bei einem Einparkmanöver intuitiv auf die entsprechenden Hinweise des Fahrassistenzsystems reagieren, ohne dass dieser durch sehr viele unterschiedliche Hinweise abgelenkt oder überfordert wird. Das Fahrassistenzsystem kann den Fahrer bei einem Fahrmanöver gezielt zu einem Fahrtrichtungswechselpunkt führen, den Fahrer bei überhöhter Geschwindigkeit bremsen und/oder den Fahrer bei Abweichungen von der idealen Bahn warnen.

Da die Punkte, an denen ein Fahrtrichtungswechsel erfolgen oder das Fahrzeug angehalten werden soll, als virtuelle Hindernisse behandelt werden, ist deren Signalisierungsart dem Fahrer schon bekannt, sodass er sich auch an keine neuen Systeme gewöhnen muss.

Das erfindungsgemäße Verfahren lässt sich in allen Fahrmanövern einsetzen, bei denen ein Fahrassistenzsystem die Querführung steuert, beispielsweise beim Ein- oder Ausparken aus Längs-, Quer- und Schrägparklücken.

### Kurze Beschreibung der Zeichnungen

Anhand der Figuren wird die Erfindung nachstehend eingehender beschrieben.

Es zeigen:
Figur 1 eine Ausführungsform der Vorrichtung mit einem gemeinsamen Steuergerät für ein Abstandswarnsystem und ein Fahrassistenzsystem,
Figur 2 eine Ausführungsform der Vorrichtung mit jeweils einem Steuergerät für ein Abstandswarnsystem und ein Fahrassistenzsystem,
Figuren 3a und b das Einparken in eine Längsparklücke mit und ohne laterale Begrenzung,
Figur 4a das Einparken in eine nur an einer Seite begrenzte Längsparklücke,
Figur 4b das Einparken eines Fahrzeugs in eine große Längsparklücke,
Figur 5 das Einparken in eine Längsparklücke bei Abweichung von der idealen Trajektorie,
Figur 6 das Einparken in eine Schrägparklücke,
Figuren 7a und b das Einparken in eine Querparklücke mit und ohne Begrenzung.

### Ausführungsformen der Erfindung

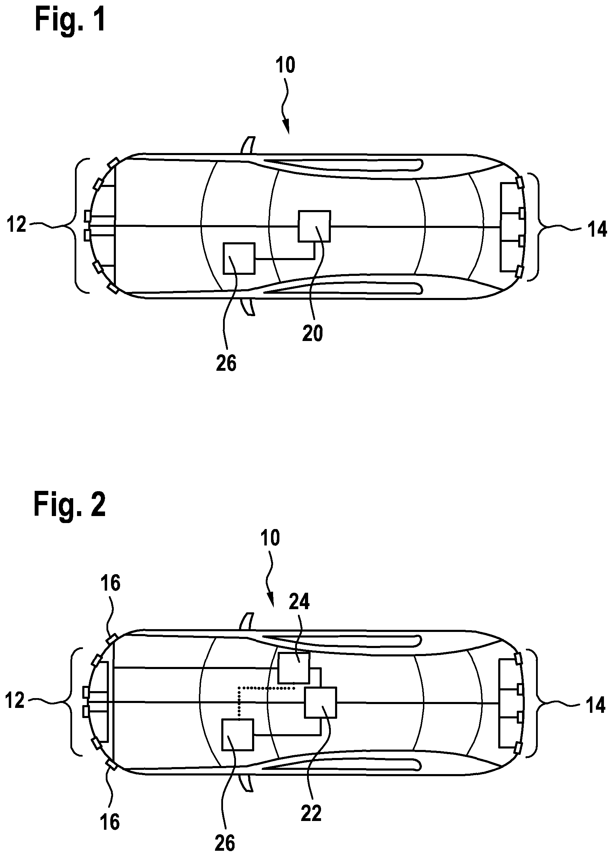

In Figur 1 ist ein Fahrzeug mit einer ersten Ausführungsform der Vorrichtung dargestellt.

Figur 1 zeigt ein Fahrzeug 10 in dem in der Front Abstandssensoren 12 und im Heck Abstandssensoren 14 angeordnet sind. Die Abstandssensoren 12, 14 sind mit einem Steuergerät 20 verbunden, welches sowohl die Funktion eines Abstandswarnsystems als auch die Funktion eines Fahrassistenzsystems, welches bei einem Fahrmanöver die Querführung steuert, implementiert. Das Steuergerät 20 ist mit einer Signalisierungsvorrichtung 26 gekoppelt. In dieser ersten Ausführungsform der Vorrichtung werden die Abstandssensoren 12, 14 sowohl für eine Abstandswarnung, die den Fahrer bei Unterschreitung eines Mindestabstands zu einem Objekt in der Umgebung des Fahrzeugs 10 warnt, als auch für ein weiteres Fahrassistenzsystem genutzt. Dieses weitere Fahrassistenzsystem übernimmt bei einem Fahrmanöver die Querführung, das heißt die Lenkung des Fahrzeugs 10. Das Beschleunigen und das Abbremsen des Fahrzeugs obliegt dabei dem Fahrer, wobei er bei einem geführten Fahrmanöver Längsführungsanweisungen erhält. Diese Längsführungshinweise werden von dem im Steuergerät 20 implementierten Fahrassistenzsystem generiert. Zur Signalisierung werden aus diesen Längsführungshinweisen virtuelle Hindernisse erzeugt, wobei diese virtuellen Hindernisse anschließend vom Steuergerät 20 genauso wie real über die Abstandssensoren 12, 14 detektierte Hindernisse behandelt werden.

Bei der Erzeugung eines virtuellen Hindernisses kann die Fahrzeuggeschwindigkeit und/oder die Reaktionsgeschwindigkeit des Fahrers über einen Offset oder Faktor berücksichtigt werden. Dabei wird beispielsweise auf die Entfernung des virtuellen Hindernisses zum Fahrer ein Offset subtrahiert, der dem Weg entspricht, den das Fahrzeug bei der aktuellen Geschwindigkeit innerhalb der Reaktionszeit des Fahrers zurücklegen würde. Ebenfalls möglich ist es einen Korrekturfaktor zu verwenden, sodass beispielsweise die Entfernung zu den virtuellen Hindernissen immer 10% geringer ausfällt. Auf diese Weise erfolgt eine Signalisierung des virtuellen Hindernisses immer so frühzeitig, dass unter Berücksichtigung der Fahrzeuggeschwindigkeit und/oder der Reaktionsgeschwindigkeit des Fahrers das Fahrzeug genau zu dem vom Fahrassistenzsystem bestimmten Punkt geführt wird.

In Figur 2 ist eine weitere Ausführungsform der erfindungsgemäßen Vorrichtung dargestellt.

Figur 2 zeigt ein Fahrzeug 10 mit einer Gruppe von Abstandssensoren 12 in der Front des Fahrzeugs und einer Gruppe von Abstandssensoren 14 im Heck des Fahrzeugs. Die Abstandssensoren 12, 14 sind mit einem Steuergerät 22 verbunden, welches die Funktion eines Abstandwarnsystems implementiert. Das Steuergerät 22 ist mit einer Signalisierungsvorrichtung 26 gekoppelt, über die dem Fahrer der Abstand zu einem Objekt in der Umgebung des Fahrzeugs 10 signalisiert wird.

Das Fahrzeug 10 weist des Weiteren seitliche Abstandssensoren 16 im Frontbereich auf, die mit einem Steuergerät 24 gekoppelt sind. Das Steuergerät 24 implementiert ein Fahrassistenzsystem, welches bei einem Fahrmanöver die Querführung steuert, beispielsweise einen Einparkassistenten. Dieses Fahrassistenzsystem vermisst über die seitlichen Abstandssensoren 16 vorhandene Parklücken bei einer Vorbeifahrt des Fahrzeugs 10. Bei einem durch das Fahrassistenzsystem geführten Fahrmanöver wird die Querführung direkt durch das Steuergerät 24 gesteuert, die Längsführung, das heißt das Beschleunigen und/oder Abbremsen des Fahrzeugs, obliegt weiterhin dem Fahrer. Dazu erhält der Fahrer Längsführungshinweise, die durch das Steuergerät 24 erzeugt werden. Zur Signalisierung dieser Längsführungshinweise erzeugt das Steuergerät 24, wie bei der vorherigen Ausführungsform beschrieben, virtuelle Hindernisse. Diese virtuellen Hindernisse werden wie reale Hindernisse durch die Signalisierungsvorrichtung 26 dem Fahrer des Fahrzeugs 10 angezeigt. Je nach Ausführungsform ist die Signalisierungsvorrichtung 26 ebenfalls mit dem Steuergerät 24 des Fahrassistenzsystems verbunden oder es besteht eine indirekte Verbindung über das Steuergerät 22 des Abstandswarnsystems.

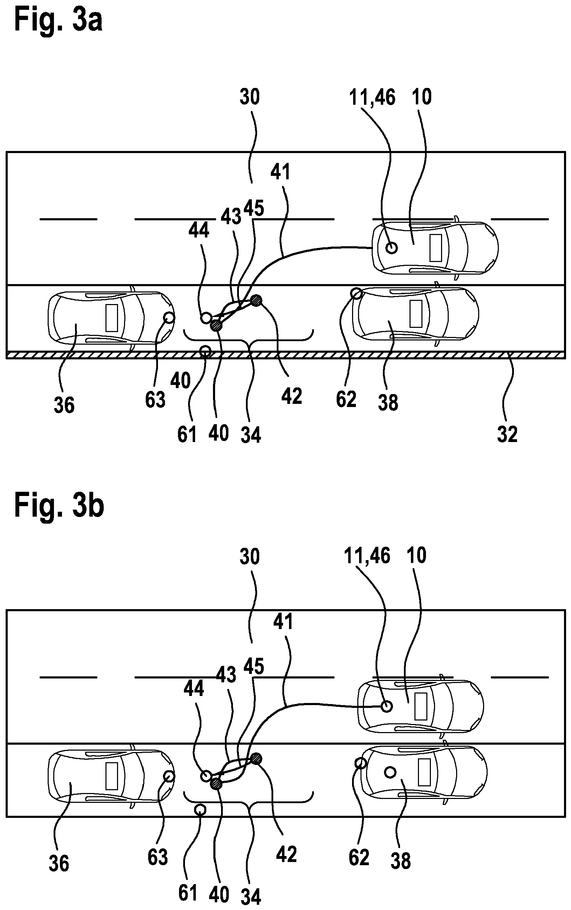

In den Figuren 3a ist das Einparken eines Fahrzeugs in eine Längsparklücke dargestellt.

Figur 3a zeigt ein Fahrzeug 10, welches in eine Längsparklücke 34 eingeparkt werden soll. Die Längsparklücke 34 ist hinten durch das Fahrzeug 36, vorne durch das Fahrzeug 38 und zu einer Seite durch eine Mauer 32 begrenzt. Die Position des Fahrzeugs 10 wird im Folgenden auf einen Referenzpunkt 11 im Heck des Fahrzeugs bezogen beschrieben. Zu Beginn befindet sich das Fahrzeug 10 links neben dem Fahrzeug 38, welches die Längsparklücke 34 nach vorne begrenzt. Die Parklücke 34 wurde bei einer zuvor erfolgten Vorbeifahrt des Fahrzeugs 10 vermessen und dem Fahrer als Parklücke angeboten. Nach Aktivierung des geführten Einparkmanövers durch den Fahrer steuert das

Fahrassistenzsystem die Querführung, das heißt die Lenkung des Fahrzeugs 10. Die Längsführung, das heißt das Beschleunigen und/oder Abbremsen des Fahrzeugs 10, obliegt weiterhin dem Fahrer.

Der erste Einparkzug wird vom Fahrer des Fahrzeugs 10 in Richtung der Parklücke 34, das heißt rückwärts, ausgeführt. Das Fahrzeug 10 fährt dabei von der Startposition 11 entlang der Trajektorie 41 zum ersten Fahrtrichtungswechselpunkt 40. Zur Signalisierung der noch zu fahrenden Strecke wird durch das Fahrassistenzsystem ein erstes virtuelles Hindernis 61 erzeugt. In der in Figur 3 a dargestellten Situation liegt das erste virtuelle Hindernis im Bereich der Mauer 32, die die Parklücke 34 begrenzt. Dem Fahrer wird durch die Signalisierungsvorrichtung jeweils der Abstand zum nächstgelegenen Hindernis signalisiert, wobei in der in Figur 3a dargestellten Situation der Abstand zur Mauer 32 und zum ersten virtuellen Hindernis 61 ungefähr gleich sind. Der Fahrer des Fahrzeugs 10 fährt entlang der Trajektorie 41 rückwärts, bis ihm durch die Signalisierungsvorrichtung das Unterschreiten eines Mindestabstands zu einem Hindernis mitgeteilt wird. Daraufhin bremst der Fahrer und das Fahrzeug 10 kommt am ersten Fahrtrichtungswechselpunkt 40 zum stehen. Bei einem zweiten Einparkzug wechselt der Fahrer des Fahrzeugs 10 in den Vorwärtsgang und fährt entlang der zweiten Trajektorie 43 in Richtung des zweiten Fahrtrichtungswechselpunkts 42. Als Längsführungshinweis wurde durch das Fahrassistenzsystem das zweite virtuelle Hindernis 62 erzeugt. Das zweite virtuelle Hindernis 62 liegt ungefähr auf Höhe des Hecks des Fahrzeugs 38, welches die Parklücke 34 nach vorne begrenzt. Wiederum wird dem Fahrer der Abstand zum nächstgelegenen Hindernis signalisiert, sodass der Fahrer das Fahrzeug 10 am zweiten Fahrtrichtungswechselpunkt 42 stoppt.

Für den dritten und letzten Einparkzug legt der Fahrer des Fahrzeugs 10 wieder den Rückwärtsgang ein und bewegt das Fahrzeug 10 entlang der dritten Einparktrajektorie 45. Als Längsführungshinweis wurde vom Fahrassistenzsystem das dritte virtuelle Hindernis 63 erzeugt, welches in der in Figur 3a dargestellten Situation mit der Front des Fahrzeugs 36, welches die Parklücke 34 nach hinten begrenzt, zusammenfällt. Nach der Signalisierung der Unterschreitung eines Mindestabstands zum nächstgelegenen Hindernis wird das Fahrzeug 10 durch den Fahrer an der Endposition 44 gestoppt.

In Figur 3b wird das Einparken in eine Längsparklücke dargestellt, wobei die Längsparklücke seitlich nicht begrenzt ist.

In Figur 3b ist wieder Fahrzeug 10 dargestellt, welches in eine Längsparklücke einfahren soll, die nach hinten durch das Fahrzeug 36 und nach vorne durch das Fahrzeug 38 begrenzt ist. Eine seitliche Begrenzung der Längsparklücke 34 fehlt. Die Parklücke 34 wurde wieder bei einer Vorbeifahrt des Fahrzeugs 10 vermessen und wird vom Fahrassistenzsystem dem Fahrer angeboten. Nach Aktivierung des geführten Fahrmanövers wird die Querführung durch das Fahrassistenzsystem gesteuert und das erste virtuelle Hindernis 61 erzeugt. Der Fahrer fährt das Fahrzeug 10 ausgehend von der Startposition 46 entlang der ersten Einparktrajektorie 41, bis ihm durch die Signalisierungsvorrichtung die Unterschreitung eines Mindestabstands zum virtuellen Hindernis 61 signalisiert wird. Daraufhin stoppt der Fahrer das Fahrzeug 10 am ersten Fahrtrichtungswechselpunkt 40. Ohne das erste virtuelle Hindernis 61 würde der Fahrer keinen Hinweis auf die Lage des ersten Fahrtrichtungswechselpunkts 40 erhalten.

Der zweite Einparkzug wird in Vorwärtsrichtung ausgeführt. Als Längsführungshinweis wurde vom Fahrassistenzsystem das virtuelle Hindernis 62 erzeugt, welches wieder mit der vorderen Begrenzung der Parklücke 34 zusammenfällt. Die Unterschreitung eines Mindestabstands zum virtuellen Hindernis 62 beziehungsweise zum vorderen Fahrzeug 38 wird dem Fahrer wieder signalisiert, sodass das Fahrzeug 10 vom Fahrer am zweiten Fahrtrichtungswechselpunkt 42 gestoppt wird.

Der dritte und letzte Einparkzug wird wieder in Rückwärtsgang ausgeführt. Das Fahrzeug bewegt sich dabei entlang der dritten Einparktrajektorie 45. Als Längsführungshinweis wurde vom Fahrassistenzsystem das virtuelle Hindernis 63 erzeugt, welches in der in Figur 3b dargestellten Situation mit der hinteren Begrenzung 36 der Längsparklücke 34 zusammenfällt.

Wiederum stoppt der Fahrer des Fahrzeugs 10 die Rückwärtsfahrt bei der Signalisierung einer Abstandsunterschreitung. Das Fahrzeug hat dann die Endposition 44 erreicht.

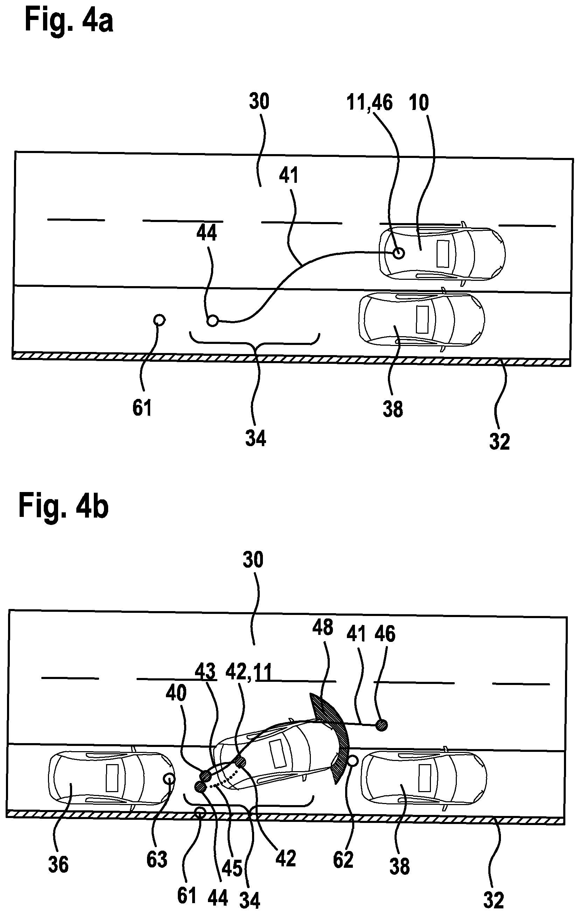

Figur 4a zeigt das Einparken in eine nur nach vorne und zur Seite begrenzte Längsparklücke.

In der in Figur 4a dargestellten Situation wird eine Längsparklücke 34 zur Seite durch eine Mauer 32 und nach vorne durch ein Fahrzeug 38 begrenzt. Bei einer Vorbeifahrt des Fahrzeugs 10 an der Parklücke 34 wurde diese vermessen und wird vom Fahrassistenzsystem dem Fahrer des Fahrzeugs 10 angeboten. Nach Aktivierung des geführten Fahrmanövers durch den Fahrer wird die Querführung des Fahrzeugs 10 durch das Fahrassistenzsystem gesteuert. Als Längsführungshinweis wird das virtuelle Hindernis 61 erzeugt. Der Fahrer beginnt das Einparkmanöver im Rückwärtsgang und fährt entlang der Trajektorie 41. Da der Parklücke 34 eine hintere Begrenzung fehlt, würde der Fahrer ohne das virtuelle Hindernis 61 nie eine Abstandswarnung erhalten, die ihn zum Stoppen des Fahrzeugs 10 an der optimalen Endposition 44 veranlassen würde.

In Figur 4b ist das Einparken in eine Längsparklücke dargestellt.

In der in 4b dargestellten Fahrsituation soll das Fahrzeug 10 in die Längsparklücke 34 eingeparkt werden, die nach vorne durch das Fahrzeug 38, nach hinten durch das Fahrzeug 36 und zur Seite durch die Mauer 32 begrenzt ist. Dabei hat der Fahrer bereits den ersten Einparkzug ausgehend von der Startposition 46 zum ersten Fahrtrichtungswechselpunkt 40 und den zweiten Einparkzug vom ersten Fahrtrichtungswechselpunkt 40 zum zweiten Fahrtrichtungswechselpunkt 42 ausgeführt. Das Ende des zweiten Einparkzuges wurde dem Fahrer des Fahrzeugs 10 durch das virtuelle Hindernis 62 signalisiert, welches aufgrund der Größe der Längsparklücke 34 nicht mit der vorderen Begrenzung 38 zusammenfällt. Ohne das zweite virtuelle Hindernis 62 hätte der Fahrer des Fahrzeugs 10 das Fahrzeug erst kurz vor Erreichen der vorderen Begrenzung 38 gestoppt und wäre somit von der optimalen Einparktrajektorie abgewichen.

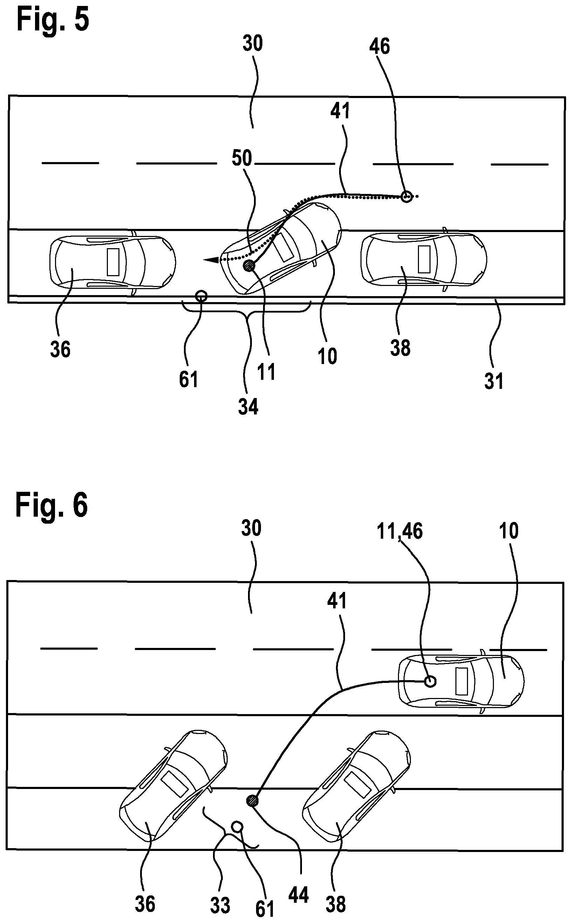

In Figur 5 ist das Einparken in eine Längsparklücke dargestellt.

Figur 5 zeigt ein Fahrzeug 10, welches in eine Längsparklücke 34, die nach vorne durch das Fahrzeug 38 und nach hinten durch das Fahrzeug 36 begrenzt ist, eingeparkt werden soll. Zur Seite ist die Parklücke durch eine Bordsteinkante 31 begrenzt, die jedoch aufgrund ihrer geringen Höhe durch das Abstandswarnsystem nicht erfasst werden kann. In der in Figur 5 dargestellten Situation ist der Fahrer des Fahrzeugs 10 zu schnell gefahren, sodass die tatsächlich gefahrene Einparktrajektorie 41 von der idealen vorberechneten Trajektorie 50 abweicht. Es droht eine Kollision mit der Bordsteinkante 31, die vom Abstandswarnsystem nicht erfasst wird. Jedoch wird dem Fahrer des Fahrzeugs 10 hier die Unterschreitung des Abstands zum virtuellen Hindernis 61 signalisiert, sodass dieser das Fahrzeug 10 stoppt.

Figur 6 zeigt das Einparken in eine Querparklücke.

In der in Figur 6 dargestellten Situation soll das Fahrzeug 10 in eine Querparklücke 33 eingeparkt werden. Die Querparklücke 33 wird durch die geparkten Fahrzeuge 36 und 38 an den Seiten begrenzt. Eine hintere Begrenzung der Parklücke 33 fehlt. Die Querparklücke 33 wurde bei einer Vorbeifahrt des Fahrzeugs 10 vermessen und wird dem Fahrer des Fahrzeugs angeboten. Nach Aktivierung des geführten Fahrmanövers übernimmt das Fahrassistenzsystem die Querführung und generiert als Längsführungshinweis das virtuelle Hindernis 61. Ausgehend von der Startposition 46 fährt das Fahrzeug 10 im Rückwärtsgang so lange, bis eine Unterschreitung eines Abstands zum virtuellen Hindernis 61 signalisiert wird. Daraufhin stoppt der Fahrer das Fahrzeug 10 in der Endposition 44.

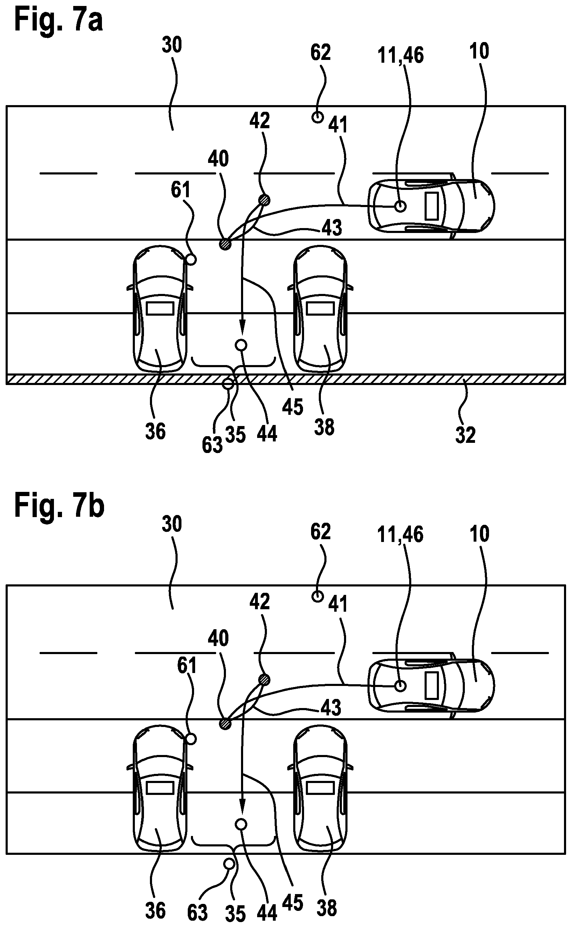

In den Figuren 7a und b wird das Einparken in eine Querparklücke mit und ohne hintere Begrenzung dargestellt.

In Figur 7a soll das Fahrzeug 10 in eine Querparklücke 35 eingeparkt werden. Die Querparklücke 35 wird zur linken Seite durch das Fahrzeug 36, zur rechten Seite durch das Fahrzeug 38 und nach hinten durch eine Mauer 32 begrenzt. Die Parklücke 35 wurde bei einer Vorbeifahrt des Fahrzeugs 10 vermessen und wird dem Fahrer angeboten. Nach Aktivierung des geführten Fahrmanövers übernimmt das Fahrassistenzsystem die Querführung. Um dem Fahrer einen Längsführungshinweis zu geben, wird vom Fahrassistenzsystem das erste virtuelle Hindernis 61 generiert, welches ungefähr mit der linken Begrenzung 36 zusammenfällt.

Beim ersten Einparkzug von der Startposition 46 entlang der ersten Einparktrajektorie 41 wird dem Fahrer das Erreichen des ersten Fahrtrichtungswechselpunkts 40 durch eine Signalisierung eines unterschrittenen Abstands zu einem Hindernis signalisiert. In der dargestellten Situation ist dabei der Abstand zum virtuellen Hindernis 61 ein wenig geringer als der Abstand des Fahrzeugs 10 zum Fahrzeug 36, welches die Parklücke zur linken Seite hin begrenzt.

Im darauf folgenden vorwärts ausgeführten zweiten Einparkzug wird das Fahrzeug 10 ausgehend vom ersten Fahrtrichtungswechselpunkt entlang der Trajektorie 43 bewegt. Als Längsführungshinweis wurde vom Fahrassistenzsystem das zweite virtuelle Hindernis 62 generiert. Da in der Nähe des virtuellen Hindernisses 62 keine weiteren Objekte sind, würde dem Fahrer ohne das zweite virtuelle Hindernis 62 ein Hinweis auf das Erreichen des zweiten Fahrtrichtungswechselpunkts fehlen. Das Erreichen dieses zweiten Fahrtrichtungswechselpunkts 42 wird dem Fahrer jedoch durch eine Unterschreitung eines Abstands zum virtuellen Hindernis 62 mitgeteilt, sodass das Fahrzeug 10 am zweiten Fahrtrichtungswechselpunkt 42 zum Stehen kommt.

Ausgehend vom zweiten Fahrtrichtungswechselpunkt 42 wird der dritte und letzte Einparkzug rückwärts ausgeführt. Als Längsführungshinweis wurde vom Fahrassistenzsystem das dritte virtuelle Hindernis 63 erzeugt. Dieses fällt in der Figur in 7a dargestellten Situation mit der Mauer 32 zusammen.

In Figur 7b fehlt die Mauer 32, sodass ohne das dritte virtuelle Hindernis 63 dem Fahrer das Erreichen der Endposition 44 nicht signalisiert werden würde.

Bei Unterschreitung eines Mindestabstands zum virtuellen Hindernis 63 wird dies dem Fahrer signalisiert, sodass dieser sowohl in der in Figur 7a als auch in der in Figur 7b dargestellten Situation die Endposition 44 erreicht.

## Patentansprüche

1. Verfahren zur Unterstützung eines Fahrers eines Fahrzeugs (10), wobei das Fahrzeug (10) ein Abstandswarnsystem, welches dem Fahrer einen Abstand zu einem Hindernis in der Umgebung des Fahrzeugs (10) signalisiert, und ein Fahrassistenzsystem, welches bei einem Fahrmanöver die Querführung steuert, umfasst, **dadurch gekennzeichnet, dass** dem Fahrer Längsführungshinweise des Fahrassistenzsystems über eine Signalisierungsvorrichtung (26) des Abstandswarnsystems angezeigt werden, wobei die Längsführungshinweise in Form eines Abstands des Fahrzeugs (10) zu einem Punkt (40, 42, 44), an dem ein Fahrtrichtungswechsel erfolgen oder das Fahrzeug (10) angehalten werden soll, angezeigt werden und wobei das Fahrassistenzsystem zur Anzeige des Abstands zu dem Punkt (40, 42, 44), an dem ein Fahrtrichtungswechsel erfolgen oder das Fahrzeug (10) angehalten werden soll, ein virtuelles Hindernis (61, 62, 63) erzeugt, welches vom Abstandswarnsystem wie ein tatsächliches Hindernis signalisiert wird.

2. Verfahren nach Anspruch 1, **dadurch gekennzeichnet, dass** die Richtung, in der ein Hindernis liegt, angezeigt wird.

3. Verfahren nach Anspruch 1 oder 2, **dadurch gekennzeichnet, dass** das Anzeigen der Längsführungshinweise akustisch erfolgt, wobei der Abstand zu einem Hindernis über verschiedene Töne und/oder Tonfolgen angezeigt wird.

4. Verfahren nach einem der Ansprüche 1 bis 3, **dadurch gekennzeichnet, dass** das Anzeigen der Längsführungshinweise optisch erfolgt, wobei der Abstand zu einem Hindernis über mehrere Leuchtanzeigen und/oder über eine Balkenanzeige dargestellt wird.

5. Vorrichtung zur Unterstützung eines Fahrers eines Fahrzeugs (10), wobei die Vorrichtung Sensoren (12, 14, 16) zur Erfassung eines Abstands des Fahrzeugs (10) zu einem Hindernis, eine Signalisierungsvorrichtung (26) und mindestens ein Steuergerät (20, 22, 24) umfasst, wobei entweder ein Steuergerät als Steuergerät für ein Abstandswarnsystem und ein Fahrassistenzsystem (20) ausgeführt ist oder jeweils ein Steuergerät als Steuergerät für ein Abstandswarnsystem (22) und ein Steuergerät als Steuergerät für ein Fahrassistenzsystem (24) ausgeführt ist und das mindestens eine Steuergerät (20, 22, 24) zur Durchführung des Verfahrens nach einem der Ansprüche 1 bis 4 eingerichtet ist.

6. Vorrichtung nach Anspruch 5, **dadurch gekennzeichnet, dass** die Signalisierungseinrichtung (26) einen Lautsprecher, eine optische Abstandsanzeigeeinrichtung, einen graphischen Bildschirm oder eine Kombination mindestens zwei dieser Mittel umfasst.

7. Computerprogramm, das das Verfahren nach einem der Ansprüche 1 bis 4 ausführt, wenn es auf einem Computer abläuft.

8. Fahrzeug mit einer Vorrichtung nach Anspruch 5 oder 6.

## Claims

1. Method for assisting a driver of a vehicle (10), wherein the vehicle (10) comprises a distance warning system which signals to the driver a distance from an obstacle in the surroundings of the vehicle (10), and a driving assistance system which controls the lateral guidance during a driving manoeuvre, **characterized in that** longitudinal guidance instructions of the driving assistance system are indicated to the driver via a signalling device (26) of the distance warning system, wherein the longitudinal guidance instructions are indicated in the form of a distance of the vehicle (10) from a point (40, 42, 44) at which a change of a direction of travel is to take place or the vehicle (10) is to be stopped, and wherein in order to indicate the distance from the point (40, 42, 44) at which a change of the direction of travel is to take place or the vehicle (10) is to be stopped, the driving assistance system generates a virtual obstacle (61, 62, 63) which is signalled as an actual obstacle by the distance warning system.

2. Method according to Claim 1, **characterized in that** the direction in which an obstacle lies is displayed.

3. Method according to Claim 1 or 2, **characterized in that** the indicating of the longitudinal guidance instructions occurs acoustically, wherein the distance from an obstacle is indicated by means of various tones and/or sequences of tones.

4. Method according to one of Claims 1 to 3, **characterized in that** the longitudinal guidance instructions are displayed visually, wherein the distance from an obstacle is represented by means of a plurality of lighting displays and/or by means of a bar display.

5. Device for assisting a driver of a vehicle (10), wherein the device comprises sensors (12, 14, 16) for sensing the distance of the vehicle (10) from an obstacle, a signalling device (26) and at least one control device (20, 22, 24), wherein either a control device is embodied as a control device for a distance warning system and a driver assistance system (20), or in each case a control device is embodied as a control device for a distance warning system (22) and a control device is embodied as a control device for a driving assistance system (24), and the at least one control device (20, 22, 24) is configured to carry out the method according to one of Claims 1 to 4.

6. Device according to Claim 5, **characterized in that** the signalling device (26) comprises a loudspeaker, a visual distance display device, a graphics screen or a combination of at least two of these means.

7. Computer program which carries out the method according to one of Claims 1 to 4 when it runs on a computer.

8. Vehicle having a device according to Claim 5 or 6.

## Revendications

1. Procédé d'assistance d'un conducteur d'un véhicule (10), dans lequel le véhicule (10) comprend un système d'alarme de distance qui signale au conducteur une distance par rapport à un obstacle se trouvant dans l'environnement du véhicule (10), et un système d'assistance à la conduite qui commande le guidage transversal lors d'une manoeuvre de conduite, **caractérisé en ce que** des indications de guidage longitudinal du système d'assistance à la conduite sont présentées au conducteur par l'intermédiaire d'un dispositif de signalisation (26) du système d'alarme de distance, dans lequel les indications de guidage longitudinal sont présentées sous la forme d'une distance du véhicule (10) par rapport à un point (40, 42, 44) où un changement de direction de conduite doit être effectué ou auquel le véhicule (10) doit être arrêté, et dans lequel le système d'assistance à la conduite génère un obstacle virtuel (61, 62, 63), qui est signalé par le système d'alarme de distance comme étant un obstacle réel afin d'afficher la distance par rapport au point (40, 42, 44) où un changement de direction de conduite doit être effectué ou auquel le véhicule (10) doit être arrêté.

2. Procédé selon la revendication 1, **caractérisé en ce que** la direction dans laquelle se trouve un obstacle est indiquée.

3. Procédé selon la revendication 1 ou 2, **caractérisé en ce que** la présentation des indications de guidage longitudinal est effectuée de manière acoustique, la distance par rapport à un obstacle étant indiquée par l'intermédiaire de tonalités et/ou de séquences de tonalités différentes.

4. Procédé selon l'une quelconque des revendications 1 à 3, **caractérisé en ce que** la présentation des indications de guidage longitudinal est effectuée de manière optique, la distance par rapport à un obstacle étant représentée par l'intermédiaire d'une pluralité d'indications lumineuses et/ou par l'intermédiaire d'une indication sous forme de barres.

5. Dispositif d'assistance d'un conducteur d'un véhicule (10), dans lequel le dispositif comprend des capteurs (12, 14, 16) destinés à détecter une distance du véhicule (10) par rapport à un obstacle, un dispositif de signalisation (26) et au moins un appareil de commande (20, 22, 24), dans lequel l'appareil de commande est réalisé soit sous la forme d'un appareil de commande destiné à un système d'alarme de distance et à un système d'assistance à la conduite (20), soit, de manière respective, l'appareil de commande est réalisé sous la forme d'un appareil de commande destiné à un système d'alarme de distance (22) et l'appareil de commande est réalisé sous la forme d'un appareil de commande destiné à un système d'assistance à la conduite (24) et l'au moins un appareil de commande (20, 22, 24) est conçu pour mettre en oeuvre le procédé selon l'une quelconque des revendications 1 à 4.

6. Dispositif selon la revendication 5, **caractérisé en ce que** le dispositif de signalisation (26) comprend un haut-parleur, un dispositif d'affichage de distance optique, un écran graphique ou une combinaison d'au moins deux de ces moyens.

7. Programme d'ordinateur qui met en oeuvre le procédé selon l'une quelconque des revendications 1 à 4 lorsqu'il s'exécute sur un ordinateur.

8. Véhicule comportant un dispositif selon la revendication 5 ou 6.
